# EUROPEAN PATENT SPECIFICATION

(11) **EP 4 564 740 B1**
(45) Date of publication and mention of the grant of the patent: **11.02.2026**
(21) Application number: 23213342.1
(22) Date of filing: 30.11.2023
(51) Int. Cl.: H04L 9/40, H04L 67/1008

(54) **A TELECOMMUNICATIONS SYSTEM AND A METHOD OF OPERATING THE TELECOMMUNICATIONS SYSTEM**
TELEKOMMUNIKATIONSSYSTEM UND VERFAHREN ZUM BETRIEB DES TELEKOMMUNIKATIONSSYSTEMS
SYSTÈME DE TÉLÉCOMMUNICATIONS ET PROCÉDÉ DE FONCTIONNEMENT DU SYSTÈME DE TÉLÉCOMMUNICATIONS

(43) Date of publication of application: 04.06.2025
(73) Proprietor: British Telecommunications public limited company, London E1 8EE (GB)
(72) Inventor: EL-MOUSSA, Fadi, London E1 8EE (GB); REEVES, Andrew, London E1 8EE (GB)
(74) Representative: British Telecommunications public limited company Intellectual Property Department

(56) References cited:
- US-A1- 2011 131 326
- US-A1- 2015 370 588
- US-A1- 2019 222 518

## Description

### Field of Invention

The present invention relates to a telecommunications system, and a method of operating said telecommunications system.

### Background

The "Internet of Things" (IoT) grants connectivity to traditionally non-networked devices, such as sensors (*e*.*g*. temperature or optical) and domestic appliances. Some applications of loT devices include people counting (*i.e.* footfall measurement), monitoring of vehicular traffic, air quality analysis, temperature and other environmental measurement, and control systems for streetlights or vehicular traffic signals.

IoT is expected to create a large volume of networked devices, which may be provided in all manner of environments, from rural to urban, and residential to industrial. The number of loT devices that are being connected to each other and to the "Cloud" over the Internet is estimated to be in the tens of billions, and this is expected to grow.

As a result, loT is expected to provide a high volume of networked devices, which, in aggregate, are expected to consume and generate significant volumes of data. Such data may need to be communicated, stored and/or processed by servers, which therefore places demands for network resources, including bandwidth, power, memory, and computational processing.

Since such network resources are typically limited, there may arise competition amongst loT devices (and client devices more generally) and amongst servers for access to the network resources. Where competition for resources is poorly managed (*e*.*g*. unfair and/or inefficient), then the loT devices may be poorly served.

It is an aim of the present invention to at least alleviate some of the aforementioned problems, and in particular to provide an efficient and fair mechanism for allocating, from a server, network resources for client devices, such as loT devices.

The following document is relevant for the definition of the invention: patent application document US 2015/370588 A1.

### Statements of Invention

According to a first aspect of the present invention, there is provided: a method of operating a telecommunications system, said system comprising a/an: client device; set of servers for providing a service to the client device; and authentication server for generating an authentication ticket for provision of the service by the set of servers to the client device; the method comprising the steps of: generating at the authentication server: a set of encrypted levels of service, said set comprising at least two different levels of service, each of said levels: comprising a performance requirement; and being encrypted with a corresponding encryption key from a set of encryption keys; and an authentication ticket, for the client device and service, said ticket comprising the set of encrypted levels of service; communicating, to the set of servers; the authentication ticket; and performing a process comprising the steps of: communicating, to the set of servers, an encryption key, from the set of encryption keys, not yet having been communicated to the set of servers; processing, by the set of servers, the authentication ticket using said communicated encryption key, thereby to retrieve the performance requirement within the corresponding level of service; determining, by the set of servers, whether to provide the service, at least, in accordance with the retrieved performance requirement; and subsequent to said determining, identifying that provision of the service, at least, according to the retrieved performance requirement is: rejected by the set of servers, in response to which subsequently reiterating the process; or accepted by at least one of the servers, in response to which subsequently selecting one of said servers to provide the service, at least, according to the retrieved performance requirement.

As used herein, a "performance requirement" preferably connotes a requested quality for the service, as quantitatively and/or qualitatively measured according to a performance metric, for example as to: performance (e.g. according to any one metric, including security, bandwidth, resilience; latency, jitter, error rate, RTT, QoS, QoE, etc.); cost; resource consumption (e.g. power, memory, and/or computational); and/or functionality (e.g. protocols, network services, codecs, etc.).

Preferably, each level of service comprises at least one performance requirement. Preferably, each performance requirement comprises at least one performance metric and at least one corresponding condition (or rule and/or minimum or maximum threshold for the performance metric).

Preferably, each level of service (and, therefore, performance requirement) is unique, at least as to the corresponding performance metric/s and/or condition/s. Preferably, the method further comprises the step of: receiving, at the authentication server, a request for the service by the client device;

Preferably, processing, by the set of servers, of the authentication ticket to retrieve the performance requirement comprises retrieving the constituent performance metric and condition, and wherein the corresponding step of determining whether to provide the service is performed by using the corresponding constituent performance metric and condition, which may in turn be performed by comparing available resources at the server with the retrieved performance requirement.

Preferably, the set of encryption keys comprises at least the same number of encryption keys as there are levels of service, and may comprise no more.

As used herein, a step referred to as being performed "by the set of servers" is preferably performed by at least one, at least two, some but not all, or all, of the servers within said set, as appropriate, and where performed by at least two servers may further be performed either simultaneously, non-simultaneously or sequentially. Preferably, the method further comprises the step of, in response to selecting one of said servers to provide the service, establishing the service according, at least, to the retrieved performance requirements.

Optionally, each server within the set associates an encryption key with the corresponding level of service by: receiving (e.g. from the client device and/or authentication server) an explicit instruction identifying said association; following a pre-defined sequence; and/or by randomly using the encryption key against the levels of service, or generally without having prior knowledge of said association.

Preferably, the levels of service are rank ordered, and wherein communicating the encryption key to the set of servers is performed according to the sequence of the rank ordering. Preferably, the encryption keys are communicated in the same (or, optionally, reverse) sequence as the rank ordering. Preferably, a first iteration of the process is performed in respect of the highest-rank (or first) level of service. That is, in a first iteration of the process, only the encryption key corresponding to the highest-rank level of service is communicated to the set of servers. Preferably, only one encryption key from the set is communicated per iteration of the process (optionally, to one or all of the servers). Preferably, reiterating the process is performed until all encryption keys have been communicated to at least one (optionally, all) of the servers. Optionally, the authentication ticket is communicated simultaneously or sequentially to the set of servers. Optionally, said rank ordering is a descending or ascending order of: preference according to the client device or the set of servers; and/or performance requirements (e.g. a quantification of resource-intensiveness). Optionally, the levels of service, performance requirements, performance metrics, conditions and/or rank ordering is/are generated by the client device, authentication server and/or a third-party entity (e.g. a manufacturer, owner or operator the aforementioned).

Preferably, upon identifying that all servers in the set have rejected provision of the service at all levels of service (specifically, the constituent performance requirements), subsequently: preventing establishment of the service; instructing a server within the set to provide the service on a best-effort basis; or re-generating a new authentication ticket with less-demanding performance requirements, and performing the process anew with said new authentication ticket.

Preferably, the set of servers comprises at least two servers, and wherein, for a given iteration of the process, the authentication ticket and/or the corresponding encryption key is/are communicated to each server simultaneously or sequentially. Preferably, sequential communication of the corresponding encryption key is performed by staggering said communication to each server, or by performing said communication in response to receiving a rejection, by a server, for the provision of the service at the level of service for the corresponding encryption key. Optionally, the authentication ticket and/or the corresponding encryption key is/are communicated to the set of servers by the authentication server and/or the client device. In response to identifying the service being accepted by at least two servers, selecting only one of said servers to provide the requested service. Optionally, said selected server is a server that: first or last accepts the requested service; and/or accepts said provision based on an improved performance requirement most in excess of the retrieved performance requirement (in which case the service is established according to the improved performance requirement).

Preferably, the method further comprises a step of detecting a first server in the set of servers rejecting the requested service for a given retrieved performance requirement, and in response communicating the authentication ticket and/or the corresponding encryption key to a second server in the set of servers. Optionally, the authentication ticket and/or the corresponding encryption key is/are communicated to the second server by (optionally, directly) the first server. The process may be performed only once, or with at least one re-iteration, and may be performed up to a maximum number of iterations equal to the number of levels of service and/or unique encryption keys in the set of encryption keys. Preferably, each encryption key is unique. Preferably, each encryption key is used to encrypt only a single level of service, that is, each encryption key has only a one-to-one mapping with a level of service. Preferably, any given encryption key is suitable for symmetric encryption or for asymmetric encryption (and may therefore comprise a plurality of constituent encryption keys). Preferably, a given encryption key is used to encrypt only the corresponding performance metric/s and/or condition/s (or the corresponding performance requirement/s as a whole). Preferably, identifying the requested service being accepted by a given server comprises receiving an acceptance communication (optionally, at the authentication server and/or client device) from said server communicating said acceptance.

Preferably, the acceptance communication may comprise an approved authentication ticket, in turn comprising the authentication ticket augmented with an additional authentication from the server accepting provision of the service. Preferably, identifying the requested service being rejected by a given server comprises receiving a rejection communication from said server communicating said rejection or determining an absence, within a pre-determined period of time, of an acceptance and/or rejection communication from said server. Preferably, identifying the requested service being rejected or accepted is performed by the client device and/or by the authentication server.

To help improve fairness, selecting one of said servers to provide the requested service is preferably performed (optionally, only) after: all of the servers have rejected or accepted the service; and/or after a pre-determined period of time since communicating the corresponding encryption key.

To help mitigate overly-rapid acceptance by a server (suggestive of improper provisioning of resources), preferably preventing selection of a server having provided acceptance within a pre-determined period after communicating the corresponding authentication ticket and/or encryption key by applying a time-delay to the acceptance communication from said server.

Preferably, the selected server is selected by the authentication server and/or client device.

Preferably, in response to selecting one of said servers, generating a Service Level Agreement, SLA, between the said one server and the client device, for provision of the service, at least, according to the retrieved performance requirement, and providing the service in compliance with said SLA. Preferably, further performing enforcement of the SLA by, in response to detecting a breach of said SLA, penalising said server in a future iteration of the method, such as by: removing the server from the set of servers; delaying communication of the authentication ticket and/or a corresponding encryption key; inducing a time penalty for responses (acceptance and/or rejection) from said server; and/or downranking the server for selection.

According to another aspect of the invention, there is provided: a method of operating an authentication server provided as a part of a telecommunications system, said system further comprising a: client device; and set of servers for providing a service to the client device, the method comprising the steps of: generating: a set of encrypted levels of service, said set comprising at least two different levels of service, each of said levels: comprising a performance requirement; and being encrypted with a corresponding encryption key from a set of encryption keys; and an authentication ticket for provision of the service by the set of servers to the client device, said ticket comprising the set of encrypted levels of service; communicating, to the set of servers; the authentication ticket; and performing a process comprising the steps of: communicating, to the set of servers, an encryption key, from the set of encryption keys, not yet having been communicated to the set of servers, thereby to permit processing, by the set of servers, of the authentication ticket using said communicated encryption key so as to retrieve the performance requirement within the corresponding level of service and to determine whether to provide the service, at least, in accordance with the retrieved performance requirement; and identifying that provision of the service, at least, according to the retrieved performance requirement, is: rejected by the set of servers, in response to which subsequently reiterating the process; or accepted by at least one of the servers, in response to which subsequently selecting one of said servers to provide the service, at least, according to the retrieved performance requirement.

According to yet another aspect of the invention, there is provided: a method of operating a set of servers configured to provide a service and provided as a part of a telecommunications system, said system further comprising a/an: client device; and authentication server for generating an authentication ticket for provision of the service by the set of servers to the client device; the method comprising the steps of: receiving an authentication ticket, for the client device and service, said ticket comprising a set of encrypted levels of service, and said set comprising at least two different levels of service, each of said levels: comprising a performance requirement; and being encrypted with a corresponding encryption key from a set of encryption keys; and performing a process comprising the steps of: receiving an encryption key, from the set of encryption keys, not yet having been received by the set of servers; processing the authentication ticket using said communicated encryption key, thereby to retrieve the performance requirement within the corresponding level of service; determining whether to provide the service, at least, in accordance with the retrieved performance requirement; and subsequent to said determining, in dependence upon identification that provision of the service, at least, according to the retrieved performance requirement, is: rejected by the set of servers, subsequently reiterating the process; or accepted by at least one of the servers, subsequently providing the service by a selected one of the servers, at least, according to the retrieved performance requirement.

According to still another aspect of the invention, there is provided: a computer-readable carrier medium comprising a computer program, which, when the computer program is executed by a computer, causes the computer to carry out the steps, or methods, as described above.

According to a further aspect of the invention, there is provided: a telecommunications system, said system comprising a/an: client device; set of servers for providing a service to the client device; and authentication server for generating an authentication ticket for provision of the service by the set of servers to the client device; the telecommunications system further comprising at least one processor configured to: generate at the authentication server: a set of encrypted levels of service, said set comprising at least two different levels of service, each of said levels: comprising a performance requirement; and being encrypted with a corresponding encryption key from a set of encryption keys; and an authentication ticket, for the client device and service, said ticket comprising the set of encrypted levels of service; communicate, to the set of servers; the authentication ticket; and perform a process comprising the steps of: communicating, to the set of servers, an encryption key, from the set of encryption keys, not yet having been communicated to the set of servers; processing, by the set of servers, the authentication ticket using said communicated encryption key, thereby to retrieve the performance requirement within the corresponding level of service; determining, by the set of servers, whether to provide the service, at least, in accordance with the retrieved performance requirement; and subsequent to said determining, identifying that provision of the service, at least, according to the retrieved performance requirement, is: rejected by the set of servers, in response to which subsequently reiterating the process; or accepted by at least one of the servers, in response to which subsequently selecting one of said servers to provide the service, at least, according to the retrieved performance requirement.

According to yet a further aspect of the invention, there is provided: an authentication server, provided as a part of a telecommunications system, said system further comprising a: client device; and set of servers for providing a service to the client device, wherein the authentication server comprises at least one processor configured to: generate: a set of encrypted levels of service, said set comprising at least two different levels of service, each of said levels: comprising a performance requirement; and being encrypted with a corresponding encryption key from a set of encryption keys; and an authentication ticket for provision of the service by the set of servers to the client device, said ticket comprising the set of encrypted levels of service; communicate, to the set of servers; the authentication ticket; and perform a process comprising the steps of: communicating, to the set of servers, an encryption key, from the set of encryption keys, not yet having been communicated to the set of servers, thereby to permit processing, by the set of servers, of the authentication ticket using said communicated encryption key so as to retrieve the performance requirement within the corresponding level of service and to determine whether to provide the service, at least, in accordance with the retrieved performance requirement; and identifying that provision of the service, at least, according to the retrieved performance requirement is: rejected by the set of servers, in response to which subsequently reiterating the process; or accepted by at least one of the servers, in response to which subsequently selecting one of said servers to provide the service, at least, according to the retrieved performance requirement.

According to still a further aspect of the invention, there is provided: a set of servers, configured to provide a service, provided as a part of a telecommunications system, said system further comprising a/an: client device; and authentication server for generating an authentication ticket for provision of the service by the set of servers to the client device, the set of servers comprising at least one processor configured to: receive an authentication ticket, for the client device and service, said ticket comprising a set of encrypted levels of service, and said set comprising at least two different levels of service, each of said levels: comprising a performance requirement; and being encrypted with a corresponding encryption key from a set of encryption keys; and perform a process comprising the steps of: receiving an encryption key, from the set of encryption keys, not yet having been received by the set of servers; processing the authentication ticket using said communicated encryption key, thereby to retrieve the performance requirement within the corresponding level of service; determining whether to provide the service, at least, in accordance with the retrieved performance requirement; and subsequent to said determining, in dependence upon identification that provision of the service, at least, according to the retrieved performance requirement is: rejected by the set of servers, subsequently reiterating the process; or accepted by at least one of the servers, in response to which subsequently providing the service by a selected one of the servers and, at least, according to the retrieved performance requirement.

According to yet a further aspect of the invention, there is provided: a method of operating a telecommunications network, said network comprising a/an: client device; a set of, at least one, server for providing a service to the client device; and authentication server for generating an authentication ticket for provision of the service by the set of servers to the client device; the method comprising the step of: receiving, at the authentication server, a service requested by the client device; generating at the authentication server a/an: first encryption key; second encryption key, different to the first encryption key; authentication ticket for the client device, wherein said authentication ticket comprises a: first level of service encrypted with the first encryption key; and second level of service encrypted with the second encryption key, wherein the first level of service is a better (or more demanding) level of service than the first requested level of service; communicating, to the set of servers; the authentication ticket and the first encryption key, without having communicated the second encryption key to the set of servers; subsequently decrypting, by the set of servers, the authentication ticket using the first encryption key thereby to retrieve the first level of service; subsequently determining, at the set of servers, whether to provide the requested service according to the decrypted first level of service; in response to the set of servers rejecting the requested service at the first level of service, communicating the second encryption key to the set of servers; subsequently decrypting, by the set of servers, the authentication ticket using the second encryption key thereby to retrieve the second level of service; and subsequently determining, at the set of servers, whether to provide the requested service according to the second level of service.

Preferably, the client device is a battery-powered wireless network communication device, and in particular and Internet of Things device. Optionally, the authentication ticket is generated according to a Kerberos protocol.

Preferably, the client device, authentication server and the set of servers are interconnected via a telecommunications network, wherein said network may comprise: a fixed-access network; a wireless local area network; a wireless local area network; a cellular network; a satellite network; and/or a HetNet.

Preferably, reiterating the (i.e. any of the precedingly recited) process is performed in response only to unanimous rejection by the set of servers.

The invention includes any novel aspects described and/or illustrated herein. The invention also extends to methods and/or apparatus substantially as herein described and/or as illustrated with reference to the accompanying drawings. The invention is also provided as a computer program and/or a computer program product for carrying out any of the methods described herein and/or for embodying any of the apparatus features described herein, and a computer-readable medium storing thereon a program for carrying out any of the methods and/or for embodying any of the apparatus features described herein. Features described as being implemented in hardware may alternatively be implemented in software, and vice versa.

Any apparatus feature may also be provided as a corresponding step of a method, and vice versa. As used herein, means plus function features may alternatively be expressed in terms of their corresponding structure, for example as a suitably-programmed processor.

Any feature in one aspect of the invention may be applied, in any appropriate combination, to other aspects of the invention. Any, some and/or all features in one aspect can be applied to any, some and/or all features in any other aspect, in any appropriate combination. Particular combinations of the various features described and defined in any aspects of the invention can be implemented and/or supplied and/or used independently.

As used throughout, the word 'or' can be interpreted in the exclusive and/or inclusive sense, unless otherwise specified.

The invention extends, at least, to a telecommunications system and a method of operating the telecommunications system as described herein and/or substantially as illustrated with reference to the accompanying drawings. The present invention is now described, purely by way of example, with reference to the accompanying diagrammatic drawings, in which:
Figure 1 is a schematic diagram of an exemplary telecommunications system; and
Figure 2 shows a process for operating the telecommunications system.

The scope of protection is defined by the independent claims. Advantageous features are set out in the dependent claims.

### Specific Description

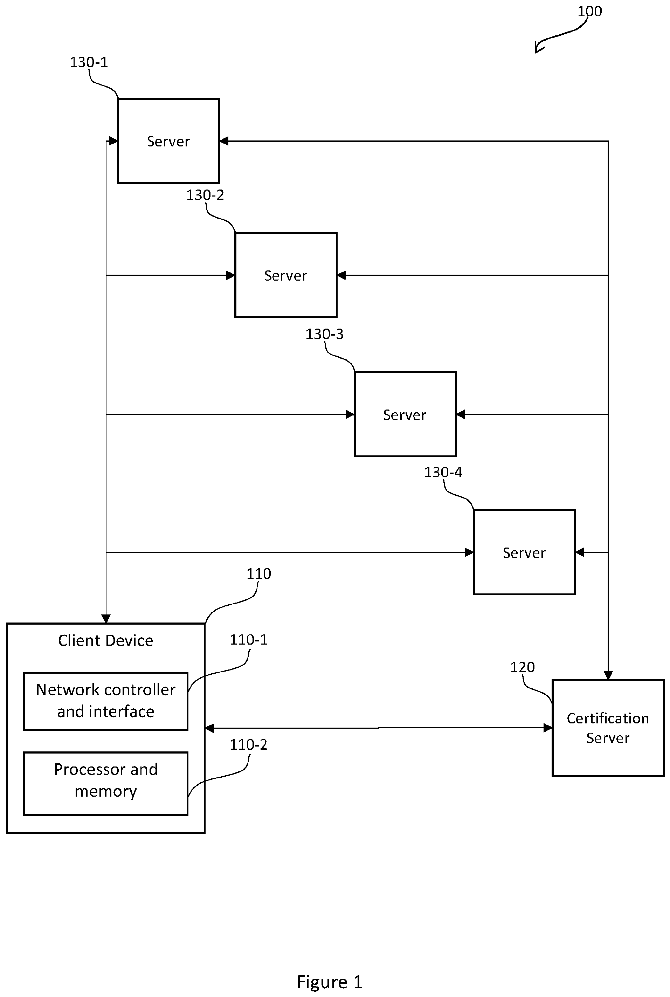

Figure 1 shows a schematic diagram of an exemplary telecommunications system 100 comprising a: Client Device (CD) 110; Certification (or Authentication) Server (CS) 120; and a set of servers 130. The CD, CS, and set of servers are communicatively connected via a telecommunications network (functionally represented by interconnecting arrows). The telecommunications network exemplarily comprises a/the: local area network; wide area network; wireless network, including cellular, Wi-Fi, and/or satellite; wired, or fixed-access, network; Internet; and/or private network.

The set of servers 130 comprises a plurality of servers, including a first 130-1, second 130-2, third 130-3 and fourth 130-4 server. Each server within said set is configured to provide, to the CD 110, a network service requested by the CD (herein "service"), in which the services include: data storage, retrieval, processing and/or manipulation; and/or networking functionality, such as data connectivity, transportation, cybersecurity, and/or routing.

Each of the servers 130 is in communication, via the telecommunications network, with the CS 120. In this example, at any given time, only one of the servers provides the service to the CD. The set of servers 130 (which may be owned and/or operated by different entities) may therefore compete to be selected to provide the service to the CD.

With the servers 130 differing as to performance, capability and configuration (*e*.*g*. processing, memory, network performance, and/or financial), for delivery of the same service to the CD 110, quality of service from each server is very likely to vary.

Accordingly, and as described in more detail below, each server 130 is configured to accept or refuse provision of the service to the CD 110 based on an assessment of a server having adequate resources to meet the resource demands of the service.

Although Figure 1 shows only a single CD 110, it will be appreciated that each server 130 may provide the, and/or another service, to a plurality of the CDs.

The set of servers 130 are available to be pre-defined and/or discoverable by the CD 110 and/or CS 120 (*e.g.* by static provisioning, DNS service lookup, DHCP, broadcast or multicast provisioning, Bonjour, or Zeroconf). For example, the CD is available to store a list of URLs corresponding to network addresses for each of the servers, in which said URLs are configured at the point of installation (*i.e.* pre-defined) or provided to the CD by a management service for the CD (*i.e.* discovered).

The CD 110 is a wireless networked computing device, and is available to be in the form of a/an: tablet; smartphone; laptop; desktop PC; wearable device; and/or loT device. In particular, the CD comprises a: network controller and interface 110-1; and processor and memory 110-2.

The CD 110, by means of the network controller and interface 110-1 and the telecommunications network, is configured to communicate with the CS 120 and the set of servers 130.

The processor and memory 110-2 is configured to generate, process, store and retrieve data, and in turn to communicate said data to the network controller and interface 110-1 for onward communication to the CS 120 and/or any of the servers 130.

By means of the processor and memory 110-2, the CD is configured to generate a request for the service, which comprises an identifier for the service (*e*.*g*. denoting data transfer) and a ranked list of performance requirements (herein the "list") for the service.

A performance requirement comprises a set of at least one condition and performance metric. The performance requirement is a rule that the service complies, at least, with said sets of conditions and performance metrics.

For example, the set of performance metrics comprises or relates to:
- Network capabilities, such as: bandwidth; throughput; latency; jitter; packet loss; network availability; reliability; Quality of Service (QoS); Round-Trip Time (RTT); capacity; network utilisation; error rate; response time; and/or congestion.
- Data storage capabilities, such as: data storage volume; data retention period; and/or read time; and/or
- Data processing capabilities, such as: encryption, including key length and/or protocol type; compression, such as codec type; and/or cybersecurity functionality.

The set of conditions comprise a Boolean and/or numerical condition (*e*.*g*. equal to, not equal to, greater than, and/or less than, a specified value or set of values) for each corresponding performance metric.

Accordingly, an exemplary performance requirement is a bandwidth (*i.e.* a performance metric) of at least 10Mbits/s (*i.e.* a condition).

The list comprises a plurality of levels of service for the performance requirements, in which each level is preference-ranked (from the favourable perspective of the CD) from a most-preferred (first) level to a least-preferred level. Each level comprises a different performance requirement (at least as to the conditions and/or performance metrics).

For an exemplary two-level list, the performance requirements for bandwidth cascades from at least 10Mbits/s to at least 5Mbits/s at a first and then second level, respectively.

To help facilitate efficient and effective negotiation, as described in more detail below, the list is convertible (*e*.*g*. by the CS 120), into an encrypted list, in which each level of performance requirements (specifically, at least, the constituent conditions or performance metrics) is encrypted using a different encryption key. In this way, access to each level of performance requirements (*e*.*g*. by the set of servers) may be sequentially controlled by appropriate sequential distribution of the encryption keys, thereby helping to effect fairer negotiation.

A more detailed exemplary list is represented in Table 1, below, alongside associated encryption keys for encrypting each corresponding level, as follows:

| *Level* | *Performance Requirements* | | *Encryption Key* |
|---|---|---|---|
| | *Performance metric* | *Condition* | |
| 1 | Bandwidth | At least 10Mbit/s | *A* |
| | Latency | Less than 10ms | |
| | Encryption key size | At least 256 bit | |
| 2 | Bandwidth | At least 5Mbit/s | *B* |
| | Latency | Less than 25ms | |
| | Encryption key size | At least 128 bit | |
| 3 | Bandwidth | At least 5Mbit/s | *C* |
| | Latency | At least 50ms | |
| | Encryption key size | At least 64 bit | |
| 4 | Bandwidth | At least 5Mbit/s | *D* |
| | Latency | Less than 25ms | |
| | Encryption key size | At least 128 bit | |
| 5 | Bandwidth | At least 5Mbit/s | *E* |
| | Latency | Less than 75ms | |
| | Encryption key size | At least 64 bit | |
| | Data storage volume | At least 5Mb | |

As shown in Table 1, the list comprises five levels (*i.e.* 1 to 5) that are rank-ordered from a most-preferred first level (*i.e.* level 1) to a least-preferred fifth level (*i.e.* level 5), and that decrease in demands for performance.

As shown in Table 1, the set of performance metrics for different levels are available to be the same or different (*e.g. "Bandwidth", "Latency"* and *"Encryption key size"* are present for all levels, whereas *"Data storage volume"* is provided only for the fifth level).

As described above, to generate the encrypted list, each level (and, at least, the corresponding set of conditions) is encrypted using the associated encryption key - *"A"* to "*E*" (indexed as the first to last keys, respectively) for levels 1 to 5, respectively.

It is to be noted that the *"Encryption key size"* performance metric field refers to the service, rather than to the encryption keys *A* to *E* (which may have the same or a different encryption key size as that specified in the corresponding condition).

The list, and specifically the set of performance metrics, set of conditions and/or the level rankings, is/are available to be pre-defined or dynamically generated. Furthermore, the list is available to be generated based on context information, such as regarding the CD 110 (*e.g.* device type, behaviour, performance, and/or location), the service, and/or the set of servers. The list is generated by the CD, CS 120 and/or an external entity (such as a manufacturer, an owner and/or an operator of the CD and/or CS).

The CS 120 is a server (or a set of servers) configured to generate an authentication ticket (also referred to as a "token" or "certificate", and herein simply "ticket") for the CD 110, and then to communicate said ticket to the CD and to each of the servers 130.

The ticket helps authenticate the CD 110 to a server 130 so as to permit the CD to access the service from any one of the servers. For example, the CS 120 generates and communicates tickets according to the Kerberos protocol.

The CS 120 is configured to receive, from the CD 110, or otherwise to generate, a unique identifier associated with the CD (*e.g.* a network identifier and/or a device serial number). As per known ticket generation processes, the CS is configured to generate a ticket that is uniquely associated with the CD using the corresponding unique identifier, and that is cryptographically secured using encryption keys (symmetric or asymmetric).

As described in more detail below, the CS is configured to generate an authentication ticket configured to effect piecemeal discovery of the performance requirements of the CD 110 to the set to servers 130, thereby to help improve negotiation therebetween.

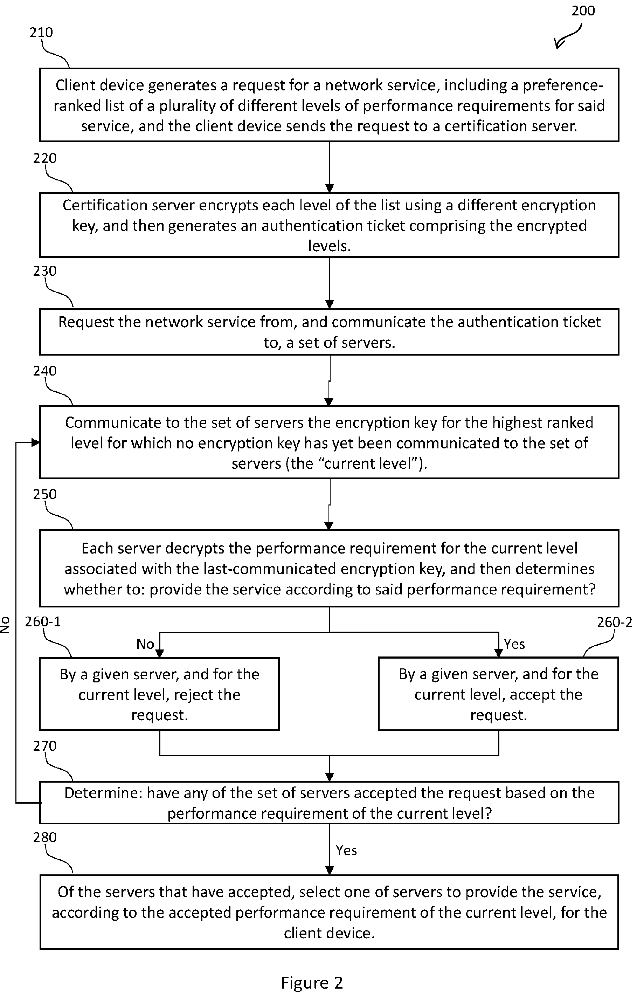

Figure 2 shows an exemplary process 200 for operating the telecommunications system 100 so as to help facilitate effective negotiation between the CD 110 and the set of servers 130, as mediated by the authentication server 130, for the provision of the service to a mutually-acceptable extent.

In a first step 210, the CD 110 generates, by means of the processor 110-2, a request for the service, which includes an identifier for the service and the list. The CD then communicates, via the telecommunications network, the request to the CS 120.

At a next step 220, after receiving the request, the CS processes the request so as to identify the CD 110, service, and list.

The CS 120 then generates a unique encryption key (symmetric or asymmetric) for each level of the list, and stores the encryption keys in association with each corresponding level. The CS also extracts the set of conditions for each level, and then encrypts, at least, said set of conditions using the associated encryption key for the corresponding level, thereby to generate an encrypted set of conditions. The encrypted set of conditions are then compiled and associated with the corresponding level and performance metric from the original list, thereby to generate an encrypted list.

Accordingly, in this example, the encrypted list provides the levels (from which to determine rank order) and performance metrics (which are visible without the encryption keys) in association with the corresponding encrypted set of conditions.

For example, with reference to Table 1 above, since there are five levels, five unique encryption keys (*e.g.* encryption keys *"A" to "E"*) are generated by the CS 120. The set of (three) conditions associated with the first level is encrypted using the first encryption key (*e.g. "A"*), whereas the second level is encrypted using the second encryption key (*e.g.* "B"), and so on for each remaining level.

The CS 120 then generates an authentication ticket for the CD 110 and service, in which the authentication ticket comprises (within the secure environment of the authentication ticket) the encrypted list.

At a next step 230, the request for the service is communicated to the set of servers 130, along with the authentication ticket, so that each server is capable of identifying the CD 110 and the service, and also of authenticating the CD.

At this step 230, the authentication ticket is communicated to the set of servers 130 without the encryption keys, and the associated conditions therefore remain hidden, by encryption, from the set of servers.

The authentication ticket is available to be communicated from the CS 120 directly to the, or at least one of the, set of servers 130 (simultaneously or sequentially), and/or indirectly, such as via the CD 110 or via another of the servers.

Regardless of the manner of communication, at a next step 240, in a first iteration of process 200, the first encryption key (*e.g. "A"),* associated with the highest-ranked (first) level, and therefore with the first encrypted set of conditions, is communicated to the set of servers 130.

In a corresponding manner to the authentication ticket, the (first and subsequent) encryption keys are communicated from the CS 120 directly to the, or at least one of the, set of servers 130 (simultaneously or sequentially), and/or indirectly, such as via the CD 110 or via another of the at least one of the set of servers 130.

Regardless of the manner of communication, at a next step 250, in this first iteration, each of the servers 130 uses the received first encryption key to decrypt the corresponding first set of encrypted conditions, thereby rendering the corresponding full performance requirements visible to the set of servers 130.

The association between the first encryption key and the first encrypted set of conditions is known to, or derivable by, the servers 130 by explicit instructions communicated along with said key, implicit deduction by the servers, or by trial-and-error.

Upon decrypting the first encrypted set of conditions, each server 130 assess whether or not to provide to the identified CD 110 the service, at least, in compliance with the first performance requirements.

Self-assessment by each server 130 is performed on the basis of whether each given server has sufficient capability and/or capacity to fulfil the service according to the first level. As an output, each server is configured either to accept or to reject (positively or silently) provision of the service.

Each server 130 is configured to communicate acceptance to the CS 120 (either directly or indirectly, such as via the CD 110). Equally, where positively stated, each server is configured to communicate rejection to the CS (either directly or indirectly, such as via the CD).

Each server 130 is also configured, upon accepting the service at a given level, to add its authorisation to the authentication ticket (in association with the accepted level), which is then communicated to the CD 110 and/or CS 120 to help evidence acceptance and complete authentication.

Accordingly, for a given server 130 and level, where the service is rejected, said server proceeds to step 260-1. Otherwise, for a given (other) server 130, where the service accepts the request, said server proceeds to step 260-2.

At a next step 270, the CS 120 assess whether any of the set of servers 130 have accepted (by following step 260-2) the service at the current level (as identified at immediately preceding step 250). In the case of the first iteration of process 200, the current level is the first level.

If, at step 270, the CS 120 determines that at least one of the servers 130 has accepted the service, then one of said servers is then selected and instructed (*e*.*g*. by the CS and/or CD) to provide the service, at least, according to the performance requirements of the current (*e*.*g*. first) level 280.

Where, at step 270, a plurality of the servers 130 are determined to have accepted the service at the current level, then a further filtering process is performed to identify, and then select, only a single one of said plurality of servers, for example by selecting the server:
- that counteroffers performance requirements most in excess (*i.e.* better than) those of the current level;
- that accepts first or last;
- that provides a most-preferred level of performance not otherwise specified in current level;
- randomly; and/or
- pre-defined as being most-preferred.

Once only a single one of the plurality of servers 130 has been selected, said one server is instructed to provide the service to the CD 110, at least, in compliance (*i.e.* matching or exceeding) with the accepted performance metrics 280.

In one example, step 270 is initiated in response to detecting acceptance from one of the servers 130. Additionally or alternatively, step 270 is initiated after a pre-defined period of time after immediately preceding step 240. As such, responses received before commencement of said period are ignored. Accordingly, by appropriately selecting said period, each server is incentivised to afford sufficient time to perform steps 250 and 260 (thereby helping to disincentivise overly rapid, and therefore potentially ill-considered responses from the servers). Correspondingly, responses received after expiry of said period are ignored from the processing of step 270, thereby helping to incentivise timely responses from servers, and helping to prevent hold-up of process 200 by unresponsive servers.

At step 280, to help enforce provision of the service in compliance with the accepted performance requirements, said performance requirements form part of a Service Level Agreement (SLA) between the selected server and the CD 110 for the service.

Where the SLA is broken by the selected server, enforcement actions are performed, such as: preventing ongoing provision of the service by the server to the CD 110; penalising the server (*e.g.* by preventing participation of the server from future instances of process 200); and/or raising a complaint with the owner and/or operator of the server.

If, however, at step 270, no server 130 is identified as having accepted the service (*i.e.* all servers follow preceding step 260-1), then process 200 re-iterates to step 240, where the CS 120 communicates the encryption key for the next highest level for which no encryption key has yet been communicated to the set of servers (said level becoming the new "current level"), thereby initiating a further iteration from step 240.

For example, in a second iteration (or a first re-iteration) of step 240, the current level is the second level, and subsequent steps 250 to 270 or 280 are performed on the basis of the second performance metrics and the associated second encryption key (*e.g. "B')* in a manner corresponding to that described above for the first level.

Where provision of the service in accordance with the second level is accepted by at least one of the servers 130, then process 200 proceeds to step 280 on the basis of said at least one server. Otherwise, where none of the servers accept (*i.e.* all servers follow preceding step 260-1), then the process 200 again re-iterates to step 240 and the next level is considered.

Steps 240 to 270 re-iterate until, at step 270, at least one server 130 is determined to have accepted (as per step 260-2), in which case the process proceeds to step 280.

Although not shown in Figure 2, where no server accepts provision of the requested service at any level of service (*i.e.* all servers follow step 260-1 for all levels and iterations of steps 240 to 270), then provision of the service to the CD 110 is denied (in which case the list is re-generated with less onerous performance requirements) or a server 130 is selected to provide the service at a best-effort level (*i.e.* performance less that the least-preferred level).

The processor and memory 110-2 is available to comprise processing circuity, in the form of at least one: Central Processing Unit (CPU); application processors; Graphics Processing Units (GPUs); Reduced Instruction Set Computing (RISC) processor; Acorn RISC Machine (ARM) processor; Complex Instruction Set Computing (CISC) processor; Digital Signal Processor (DSP); Field Programmable Gate Arrays (FPGA); Programmable Logic Device (PLD); Application-Specific Integrated Circuit (ASIC); microprocessor or controller; or any suitable combination thereof. As examples, the processor may include at least one: Intel Pentium^{®}, Core^{®}, or Xeon^{®} processor(s); Advanced Micro Devices (AMD) Ryzen^{®} processor(s); Accelerated Processing Units (APUs); or Epyc^{®} processors; ARM-based processor(s) licensed from ARM Holdings, Ltd. such as the ARM Cortex-A family of processors and the ThunderX2C^{®} provided by Cavium(^{™}), Inc.; a MIPS-based design from MIPS Technologies, Inc. such as MIPS Warrior P-class processors; and/or the like.

The processor and memory 110-2 is available to comprise data storage elements in the form of on-chip memory circuitry, such as any suitable volatile and/or non-volatile memory, including: Dynamic Random Access Memory (DRAM) and/or Synchronous Dynamic Random Access Memory (SDRAM); high-speed electrically erasable memory (commonly referred to as Flash memory); Phase-change Random Access Memory (PRAM); Magneto-resistive Random Access Memory (MRAM); solid state memory; Erasable Programmable Read-Only Memory (EPROM); and/or Electrically Erasable Programmable Read-Only Memory (EEPROM).

The set of servers are available to be in the form of a Cloud computing network.

### Alternatives and Modifications

In an alternative, the list comprises performance metrics that are preference reverse-ranked, such that the first level is instead a least-preferred (minimum) performance requirement and the last level is the most-preferred performance requirement. In this alternative, process 200 is modified to identify, starting from the highest level, the lowest level (*i.e.* best performance) at which at least one of the servers 130 is willing to accept service.

In an alternative, the encryption key for a given current level is communicated to only one of the servers 130 at a time, and the encryption key is then communicated to another of the servers after rejection by the prior server. In this way, assessment of provision of the service at a current level is performed sequentially, rather than simultaneously, by the set of servers 130.

It will be appreciated that actions described above as being performed by the CD 110 or CS 120 are, as appropriate, available to be performed by the other or together. For example, the CD is available to generate the encryption keys. Furthermore, the servers 130 are, in an alternative, available to perform certain of said actions, as appropriate. For example, the encryption key is available to be shared between the servers, such as where the servers sequentially assess whether to provide the service.

The CS 120 is available to be remote from the CD 110 and/or the set of servers 130, or to form a part of the CD itself, such that the CS forms part of a self-authentication function and apparatus of CD.

Furthermore, in an alternative, process 200 is modified such that one of the set of servers 130 seeks to push a service upon a plurality of the CDs 110, in which said CDs are available to accept or reject said service (*i.e.* in a role reversal with the plurality of servers as described in process 200).

In an alternative, at step 240, the encryption key is only provided to a given server 130 if requested by said server.

In an alternative, in addition to the set of conditions, the performance metric and/or rank are also encrypted by the corresponding encryption key.

Each feature disclosed herein, and (where appropriate) as part of the claims and drawings may be provided independently or in any appropriate combination.

Any reference numerals appearing in the claims are for illustration only and shall not limit the scope of the claims.

## Claims

1. A method of operating a telecommunications system, said system comprising a/an:
client device;
set of servers for providing a service to the client device; and
authentication server for generating an authentication ticket for provision of the service
by the set of servers to the client device;
the method comprising the steps of:
generating at the authentication server:
a set of encrypted levels of service, said set comprising at least two different levels of service, each of said levels:
comprising a performance requirement; and
being encrypted with a corresponding encryption key from a set of encryption keys; and
the authentication ticket, for the client device and service, said authentication ticket comprising the set of encrypted levels of service;
communicating, to the set of servers; the authentication ticket; and
performing a process comprising the steps of:
communicating, to the set of servers, an encryption key, from the set of encryption keys, not yet having been communicated to the set of servers;
processing, by the set of servers, the authentication ticket using said communicated encryption key, thereby to retrieve the performance requirement within the corresponding level of service;
determining, by the set of servers, whether to provide the service, at least, in accordance with the retrieved performance requirement; and
subsequent to said determining, identifying that provision of the service, at least, according to the retrieved performance requirement is:
rejected by the set of servers, in response to which subsequently reiterating the process; or
accepted by at least one of the servers of said set of servers, in response to which subsequently selecting one of the at least one of the servers of said set of servers to provide the service, at least, according to the retrieved performance requirement.

2. A method according to Claim 1, wherein the levels of service are rank ordered, and wherein communicating the encryption key to the set of servers is performed according to the sequence of the rank ordering.

3. A method according to any preceding claim, wherein the set of servers comprises at least two servers, and wherein, for a given iteration of the process, the authentication ticket and/or the corresponding encryption key is/are communicated to each server simultaneously or sequentially.

4. A method according to Claim 3, further comprising a step of detecting a first server in the set of servers rejecting the requested service for a given retrieved performance requirement, and in response communicating the authentication ticket and/or the corresponding encryption key to a second server in the set of servers.

5. A method according to any preceding claim, wherein in response to selecting one of the at least one of the servers of said set of servers, generating a Service Level Agreement, SLA, between the selected one of the at least one of the servers of said set of servers and the client device, for provision of the service, at least, according to the retrieved performance requirement, and providing the service in compliance with said SLA.

6. A method of operating an authentication server provided as a part of a telecommunications system, said system further comprising a: client device; and set of servers for providing a service to the client device, the method comprising the steps of:
generating:
a set of encrypted levels of service, said set comprising at least two different levels of service, each of said levels:
comprising a performance requirement; and
being encrypted with a corresponding encryption key from a set of encryption keys; and
an authentication ticket for provision of the service by the set of servers to the client device, said ticket comprising the set of encrypted levels of service;
communicating, to the set of servers; the authentication ticket; and
performing a process comprising the steps of:
communicating, to the set of servers, an encryption key, from the set of encryption keys, not yet having been communicated to the set of servers, thereby to permit processing, by the set of servers, of the authentication ticket using said communicated encryption key so as to retrieve the performance requirement within the corresponding level of service and to determine whether to provide the service, at least, in accordance with the retrieved performance requirement; and
identifying that provision of the service, at least, according to the retrieved performance requirement, is:
rejected by the set of servers, in response to which subsequently reiterating the process; or
accepted by at least one of the servers of said set of servers, in response to which subsequently selecting one of the at least one of the servers of said set of servers to provide the service, at least, according to the retrieved performance requirement.

7. A method of operating a set of servers configured to provide a service and provided as a part of a telecommunications system, said system further comprising a/an: client device; and authentication server for generating an authentication ticket for provision of the service by the set of servers to the client device; the method comprising the steps of:
receiving the authentication ticket, for the client device and service, said authentication ticket comprising a set of encrypted levels of service, and said set comprising at least two different levels of service, each of said levels:
comprising a performance requirement; and
being encrypted with a corresponding encryption key from a set of encryption keys; and
performing a process comprising the steps of:
receiving an encryption key, from the set of encryption keys, not yet having been received by the set of servers;
processing the authentication ticket using said communicated encryption key, thereby to retrieve the performance requirement within the corresponding level of service;
determining whether to provide the service, at least, in accordance with the retrieved performance requirement; and
subsequent to said determining, in dependence upon identification that provision of the service, at least, according to the retrieved performance requirement, is:
rejected by the set of servers, subsequently reiterating the process; or
accepted by at least one of the servers of said set of servers, subsequently providing the service by a selected one of the at least one of the servers of said set of servers, at least, according to the retrieved performance requirement.

8. A computer-readable carrier medium comprising a computer program, which, when the computer program is executed by a computer, causes the computer to carry out the steps of any one of the preceding claims.

9. A telecommunications system, said system comprising a/an:
client device;
set of servers for providing a service to the client device; and
authentication server for generating an authentication ticket for provision of the service by the set of servers to the client device;
the telecommunications system further comprising at least one processor configured to:
generate at the authentication server:
a set of encrypted levels of service, said set comprising at least two different levels of service, each of said levels:
comprising a performance requirement; and
being encrypted with a corresponding encryption key from a set of encryption keys; and
the authentication ticket, for the client device and service, said authentication ticket comprising the set of encrypted levels of service;
communicate, to the set of servers; the authentication ticket; and
perform a process comprising the steps of:
communicating, to the set of servers, an encryption key, from the set of encryption keys, not yet having been communicated to the set of servers;
processing, by the set of servers, the authentication ticket using said communicated encryption key, thereby to retrieve the performance requirement within the corresponding level of service;
determining, by the set of servers, whether to provide the service, at least, in accordance with the retrieved performance requirement; and
subsequent to said determining, identifying that provision of the service, at least, according to the retrieved performance requirement, is:
rejected by the set of servers, in response to which subsequently reiterating the process; or
accepted by at least one of the servers of said set of servers, in response to which subsequently selecting one of the at least one of the servers of said servers to provide the service, at least, according to the retrieved performance requirement.

10. An authentication server, provided as a part of a telecommunications system, said system further comprising a: client device; and set of servers for providing a service to the client device, wherein the authentication server comprises at least one processor configured to:
generate:
a set of encrypted levels of service, said set comprising at least two different levels of service, each of said levels:
comprising a performance requirement; and
being encrypted with a corresponding encryption key from a set of encryption keys; and
an authentication ticket for provision of the service by the set of servers to the client device, said ticket comprising the set of encrypted levels of service;
communicate, to the set of servers; the authentication ticket; and
perform a process comprising the steps of:
communicating, to the set of servers, an encryption key, from the set of encryption keys, not yet having been communicated to the set of servers, thereby to permit processing, by the set of servers, of the authentication ticket using said communicated encryption key so as to retrieve the performance requirement within the corresponding level of service and to determine whether to provide the service, at least, in accordance with the retrieved performance requirement; and
identifying that provision of the service, at least, according to the retrieved performance requirement is:
rejected by the set of servers, in response to which subsequently reiterating the process; or
accepted by at least one of the servers of said set of servers, in response to which subsequently selecting one of the at least one of the servers of said set of servers to provide the service, at least, according to the retrieved performance requirement.

11. A set of servers, configured to provide a service, provided as a part of a telecommunications system, said system further comprising a/an: client device; and authentication server for generating an authentication ticket for provision of the service by the set of servers to the client device, the set of servers comprising at least one processor configured to:
receive the authentication ticket, for the client device and service, said authentication ticket comprising a set of encrypted levels of service, and said set comprising at least two different levels of service, each of said levels:
comprising a performance requirement; and
being encrypted with a corresponding encryption key from a set of encryption keys; and
perform a process comprising the steps of:
receiving an encryption key, from the set of encryption keys, not yet having been received by the set of servers;
processing the authentication ticket using said communicated encryption key, thereby to retrieve the performance requirement within the corresponding level of service;
determining whether to provide the service, at least, in accordance with the retrieved performance requirement; and
subsequent to said determining, in dependence upon identification that provision of the service, at least, according to the retrieved performance requirement is:
rejected by the set of servers, subsequently reiterating the process; or
accepted by at least one of the servers of said set of servers, in response to which subsequently providing the service by a selected one of the at least one of the servers of said set of servers and, at least according to the retrieved performance requirement.

## Patentansprüche

1. Verfahren zum Betrieb eines Telekommunikationssystems, das System umfassend:
eine Client-Vorrichtung;
eine Menge von Servern zur Bereitstellung eines Dienstes für die Client-Vorrichtung; und
einen Authentisierungsserver zur Erzeugung eines Authentisierungstickets für die Bereitstellung des Dienstes durch die Menge von Servern für die Client-Vorrichtung;
wobei das Verfahren die folgenden Schritte umfasst:
Erzeugen auf dem Authentisierungsserver:
einer Menge verschlüsselter Service-Levels, wobei die Menge mindestens zwei unterschiedliche Service-Levels umfasst, wobei jedes der Service-Levels:
eine Leistungsanforderung umfasst; und
mit einem entsprechenden Verschlüsselungsschlüssel aus einer Menge von Verschlüsselungsschlüsseln verschlüsselt ist; und
des Authentisierungstickets für die Client-Vorrichtung und den Dienst, wobei das Authentisierungsticket die Menge der verschlüsselten Service-Levels umfasst;
Übermitteln, an die Menge von Servern, des Authentisierungstickets; und
Durchführen eines Prozesses, der die folgenden Schritte umfasst:
Übermitteln an die Menge von Servern eines Verschlüsselungsschlüssels aus der Menge von Verschlüsselungsschlüsseln, der der Menge von Servern bislang noch nicht übermittelt wurde;
Verarbeiten des Authentisierungstickets durch die Menge von Servern unter Verwendung des übermittelten Verschlüsselungsschlüssels, um dadurch die Leistungsanforderung innerhalb des entsprechenden Service-Levels abzurufen;
Bestimmen durch die Menge von Servern, ob der Dienst zumindest gemäß der abgerufenen Leistungsanforderung bereitgestellt werden soll; und
nach diesem Bestimmen, Identifizieren, dass die Bereitstellung des Dienstes zumindest gemäß der abgerufenen Leistungsanforderung:
von der Menge von Servern zurückgewiesen wird, woraufhin der Prozess anschließend erneut durchgeführt wird; oder
von mindestens einem der Server der Menge von Servern akzeptiert wird, woraufhin anschließend einer der mindestens einen Server der Menge von Servern ausgewählt wird, um den Dienst zumindest gemäß der abgerufenen Leistungsanforderung bereitzustellen.

2. Verfahren nach Anspruch 1, wobei die Service-Levels in Rangordnung gebracht sind und wobei das Übermitteln des Verschlüsselungsschlüssels an die Menge von Servern entsprechend der Reihenfolge der Rangordnung erfolgt.

3. Verfahren nach einem der vorhergehenden Ansprüche, wobei die Menge von Servern mindestens zwei Server umfasst, und wobei für eine gegebene Iteration des Prozesses das Authentisierungsticket und/oder der entsprechende Verschlüsselungsschlüssel gleichzeitig oder sequenziell an jeden Server übermittelt wird/werden.

4. Verfahren nach Anspruch 3, ferner umfassend einen Schritt des Erkennens, dass ein erster Server der Menge von Servern den angeforderten Dienst für eine gegebene abgerufene Leistungsanforderung zurückweist, und als Reaktion darauf das Übermitteln des Authentisierungstickets und/oder des entsprechenden Verschlüsselungsschlüssels an einen zweiten Server der Menge von Servern.

5. Verfahren nach einem der vorhergehenden Ansprüche, wobei als Reaktion auf das Auswählen eines der mindestens einen Server der Menge von Servern eine Service-Level-Vereinbarung (SLA) zwischen dem ausgewählten einen der mindestens einen Server der Menge von Servern und der Client-Vorrichtung für die Bereitstellung des Dienstes zumindest gemäß der abgerufenen Leistungsanforderung erzeugt wird, und wobei der Dienst in Übereinstimmung mit der SLA bereitgestellt wird.

6. Verfahren zum Betrieb eines Authentisierungsservers, der als Teil eines Telekommunikationssystems bereitgestellt ist, wobei das System ferner umfasst: eine Client-Vorrichtung; und eine Menge von Servern zur Bereitstellung eines Dienstes für die Client-Vorrichtung, wobei das Verfahren die folgenden Schritte umfasst:
Erzeugen:
einer Menge verschlüsselter Service-Levels, wobei die Menge mindestens zwei unterschiedliche Service-Levels umfasst, wobei jedes der Service-Levels:
eine Leistungsanforderung umfasst; und
mit einem entsprechenden Verschlüsselungsschlüssel aus einer Menge von Verschlüsselungsschlüsseln verschlüsselt ist; und
eines Authentisierungstickets für die Bereitstellung des Dienstes durch die Menge von Servern für die Client-Vorrichtung, wobei das Authentisierungsticket die Menge der verschlüsselten Service-Level umfasst;
Übermitteln, an die Menge von Servern, des Authentisierungstickets; und
Durchführen eines Prozesses, der die folgenden Schritte umfasst:
Übermitteln an die Menge von Servern eines Verschlüsselungsschlüssels aus der Menge von Verschlüsselungsschlüsseln, der der Menge von Servern bislang noch nicht übermittelt wurde, um dadurch das Verarbeiten des Authentisierungstickets durch die Menge von Servern unter Verwendung des übermittelten Verschlüsselungsschlüssels zu ermöglichen, sodass die Leistungsanforderung innerhalb des entsprechenden Service-Levels abgerufen wird und bestimmt wird, ob der Dienst zumindest gemäß der abgerufenen Leistungsanforderung bereitgestellt werden soll; und
Identifizieren, dass die Bereitstellung des Dienstes zumindest gemäß der abgerufenen Leistungsanforderung:
von der Menge von Servern zurückgewiesen wird, woraufhin der Prozess anschließend erneut durchgeführt wird; oder
von mindestens einem der Server der Menge von Servern akzeptiert wird, woraufhin anschließend einer der mindestens einen Server der Menge von Servern ausgewählt wird, um den Dienst zumindest gemäß der abgerufenen Leistungsanforderung bereitzustellen.

7. Verfahren zum Betrieb einer Menge von Servern, die zur Bereitstellung eines Dienstes konfiguriert sind und als Teil eines Telekommunikationssystems bereitgestellt sind, wobei das System ferner umfasst: eine Client-Vorrichtung; und einen Authentisierungsserver zur Erzeugung eines Authentisierungstickets für die Bereitstellung des Dienstes durch die Menge von Servern für die Client-Vorrichtung; wobei das Verfahren die folgenden Schritte umfasst:
Empfangen des Authentisierungstickets für die Client-Vorrichtung und den Dienst, wobei das Authentisierungsticket eine Menge verschlüsselter Service-Level umfasst, wobei die Menge mindestens zwei unterschiedliche Service-Level umfasst, wobei jedes der Service-Level:
eine Leistungsanforderung umfasst; und
mit einem entsprechenden Verschlüsselungsschlüssel aus einer Menge von Verschlüsselungsschlüsseln verschlüsselt ist;
und
Durchführen eines Prozesses, der die folgenden Schritte umfasst:
Empfangen eines Verschlüsselungsschlüssels aus der Menge von Verschlüsselungsschlüsseln, der von der Menge von Servern bislang noch nicht empfangen wurde;
Verarbeiten des Authentisierungstickets unter Verwendung des übermittelten Verschlüsselungsschlüssels, um dadurch die Leistungsanforderung innerhalb des entsprechenden Service-Levels zu extrahieren;
Bestimmen, ob der Dienst zumindest gemäß der abgerufenen Leistungsanforderung bereitgestellt werden soll; und
nach dem Bestimmen, in Abhängigkeit von dem Identifizieren, dass die Bereitstellung des Dienstes zumindest gemäß der abgerufenen Leistungsanforderung:
von der Menge von Servern zurückgewiesen wird, den Prozess anschließend erneut durchzuführen; oder
von mindestens einem der Server der Menge von Servern akzeptiert wird, den Dienst anschließend durch einen ausgewählten der mindestens einen Server der Menge von Servern zumindest gemäß der abgerufenen Leistungsanforderung bereitzustellen.

8. Computerlesbares Trägermedium, das ein Computerprogramm umfasst, das, wenn das Computerprogramm von einem Computer ausgeführt wird, den Computer veranlasst, die Schritte nach einem der vorhergehenden Ansprüche auszuführen.

9. Telekommunikationssystem, wobei das System umfasst:
eine Client-Vorrichtung;
eine Menge von Servern zur Bereitstellung eines Dienstes für die Client-Vorrichtung; und
einen Authentisierungsserver zur Erzeugung eines Authentisierungstickets für die Bereitstellung des Dienstes durch die Menge von Servern für die Client-Vorrichtung;
wobei das Telekommunikationssystem ferner mindestens einen Prozessor umfasst, der konfiguriert ist zum:
Erzeugen auf dem Authentisierungsserver:
einer Menge verschlüsselter Service-Levels, wobei die Menge mindestens zwei unterschiedliche Service-Levels umfasst, wobei jedes der Service-Levels:
eine Leistungsanforderung umfasst; und
mit einem entsprechenden Verschlüsselungsschlüssel aus einer Menge von Verschlüsselungsschlüsseln verschlüsselt ist; und
des Authentisierungstickets für die Client-Vorrichtung und den Dienst, wobei das Authentisierungsticket die Menge der verschlüsselten Service-Levels umfasst;
Übermitteln an die Menge von Servern, des Authentisierungstickets; und
Durchführen eines Prozesses, der die folgenden Schritte umfasst:
Übermitteln an die Menge von Servern eines Verschlüsselungsschlüssels aus der Menge von Verschlüsselungsschlüsseln, der der Menge von Servern bislang noch nicht übermittelt wurde;
Verarbeiten des Authentisierungstickets durch die Menge von Servern unter Verwendung des übermittelten Verschlüsselungsschlüssels, um dadurch die Leistungsanforderung innerhalb des entsprechenden Service-Levels zu extrahieren;
Bestimmen durch die Menge von Servern, ob der Dienst zumindest gemäß der abgerufenen Leistungsanforderung bereitgestellt werden soll; und
nach dem Bestimmen, Identifizieren, dass die Bereitstellung des Dienstes zumindest gemäß der abgerufenen Leistungsanforderung:
von der Menge von Servern zurückgewiesen wird, woraufhin der Prozess anschließend erneut durchgeführt wird; oder
von mindestens einem der Server der Menge von Servern akzeptiert wird, woraufhin anschließend einer der mindestens einen Server der Menge von Servern ausgewählt wird, um den Dienst zumindest gemäß der abgerufenen Leistungsanforderung bereitzustellen.

10. Authentisierungsserver, der als Teil eines Telekommunikationssystems bereitgestellt ist, wobei das System ferner umfasst: eine Client-Vorrichtung; und eine Menge von Servern zur Bereitstellung eines Dienstes für die Client-Vorrichtung, wobei der Authentisierungsserver mindestens einen Prozessor umfasst, der konfiguriert ist zum:
Erzeugen:
einer Menge verschlüsselter Service-Levels, wobei die Menge mindestens zwei unterschiedliche Service-Levels umfasst, wobei jedes der Service-Levels:
eine Leistungsanforderung umfasst; und
mit einem entsprechenden Verschlüsselungsschlüssel aus einer Menge von Verschlüsselungsschlüsseln verschlüsselt ist; und
eines Authentisierungstickets für die Bereitstellung des Dienstes durch die Menge von Servern für die Client-Vorrichtung, wobei das Authentisierungsticket die Menge der verschlüsselten Service-Level umfasst;
Übermitteln an die Menge von Servern, des Authentisierungstickets; und
Durchführen eines Prozesses, der die folgenden Schritte umfasst:
Übermitteln an die Menge von Servern eines Verschlüsselungsschlüssels aus der Menge von Verschlüsselungsschlüsseln, der der Menge von Servern bislang noch nicht übermittelt wurde, um dadurch das Verarbeiten des Authentisierungstickets durch die Menge von Servern unter Verwendung des übermittelten Verschlüsselungsschlüssels zu ermöglichen, sodass die Leistungsanforderung innerhalb des entsprechenden Service-Levels abgerufen wird und bestimmt wird, ob der Dienst zumindest gemäß der abgerufenen Leistungsanforderung bereitgestellt werden soll; und
Identifizieren, dass die Bereitstellung des Dienstes zumindest gemäß der abgerufenen Leistungsanforderung:
von der Menge von Servern zurückgewiesen wird, woraufhin der Prozess anschließend erneut durchgeführt wird; oder
von mindestens einem der Server der Menge von Servern akzeptiert wird, woraufhin anschließend einer der mindestens einen Server der Menge von Servern ausgewählt wird, um den Dienst zumindest gemäß der abgerufenen Leistungsanforderung bereitzustellen.

11. Menge von Servern, die zur Bereitstellung eines Dienstes konfiguriert ist und als Teil eines Telekommunikationssystems bereitgestellt ist, wobei das System ferner umfasst: eine Client-Vorrichtung; und einen Authentisierungsserver zur Erzeugung eines Authentisierungstickets für die Bereitstellung des Dienstes durch die Menge von Servern für die Client-Vorrichtung, wobei die Menge von Servern mindestens einen Prozessor umfasst, der konfiguriert ist zum:
Empfangen des Authentisierungstickets für die Client-Vorrichtung und den Dienst, wobei das Authentisierungsticket eine Menge verschlüsselter Service-Level umfasst, wobei die Menge mindestens zwei unterschiedliche Service-Level umfasst, wobei jedes der Service-Level:
eine Leistungsanforderung umfasst; und
mit einem entsprechenden Verschlüsselungsschlüssel aus einer Menge von Verschlüsselungsschlüsseln verschlüsselt ist;
und
Durchführen eines Prozesses, der die folgenden Schritte umfasst:
Empfangen eines Verschlüsselungsschlüssels aus der Menge von Verschlüsselungsschlüsseln, der von der Menge von Servern bislang noch nicht empfangen wurde;
Verarbeiten des Authentisierungstickets unter Verwendung des übermittelten Verschlüsselungsschlüssels, um dadurch die Leistungsanforderung innerhalb des entsprechenden Service-Levels zu extrahieren;
Bestimmen, ob der Dienst zumindest gemäß der abgerufenen Leistungsanforderung bereitgestellt werden soll; und
nach dem Bestimmen, in Abhängigkeit von dem Identifizieren, dass die Bereitstellung des Dienstes zumindest gemäß der abgerufenen Leistungsanforderung:
von der Menge von Servern zurückgewiesen wird, den Prozess anschließend erneut durchzuführen; oder
von mindestens einem der Server der Menge von Servern akzeptiert wird, woraufhin der Dienst anschließend durch einen ausgewählten der mindestens einen Server der Menge von Servern und zumindest gemäß der abgerufenen Leistungsanforderung bereitgestellt wird.

## Revendications

1. Procédé d'exploitation d'un système de télécommunications, ledit système comprenant un :
dispositif client ;
ensemble de serveurs destiné à fournir un service au dispositif client ; et
serveur d'authentification destiné à générer un ticket d'authentification pour la fourniture du service par l'ensemble de serveurs au dispositif client ;
le procédé comprenant les étapes de :
génération, au niveau du serveur d'authentification : d'un ensemble de niveaux de service chiffrés, ledit ensemble comprenant au moins deux niveaux de service différents, chacun desdits niveaux :
comprenant une exigence de performance ; et
étant chiffré avec une clé de chiffrement correspondante issue d'un ensemble de clés de chiffrement ; et
le ticket d'authentification pour le dispositif client et le service, ledit ticket d'authentification comprenant l'ensemble de niveaux de service chiffrés ;
communication, à l'ensemble de serveurs, du ticket d'authentification ; et
réalisation d'un processus comprenant les étapes de :
communication, à l'ensemble de serveurs, d'une clé de chiffrement, issue de l'ensemble de clés de chiffrement, n'ayant pas encore été communiquée à l'ensemble de serveurs ;
traitement, par l'ensemble de serveurs, du ticket d'authentification à l'aide de ladite clé de chiffrement communiquée, pour récupérer ainsi l'exigence de performance au sein du niveau de service correspondant ;
détermination, par l'ensemble de serveurs, selon laquelle il convient ou non de fournir le service, au moins, conformément à l'exigence de performance récupérée ; et
suite à ladite détermination, identification du fait que la fourniture du service, au moins, selon l'exigence de performance récupérée est :
rejetée par l'ensemble de serveurs, en réaction à quoi il convient de réitérer ultérieurement le processus ; ou
acceptée par au moins l'un des serveurs dudit ensemble de serveurs, en réaction à quoi il convient de sélectionner ultérieurement un serveur parmi le ou les serveurs dudit ensemble de serveurs pour fournir le service, au moins, selon l'exigence de performance récupérée.

2. Procédé selon la revendication 1, les niveaux de service étant ordonnés par rang, et la communication de la clé de chiffrement à l'ensemble de serveurs étant effectuée conformément à la séquence de l'ordre de rang.

3. Procédé selon l'une quelconque des revendications précédentes, l'ensemble de serveurs comprenant au moins deux serveurs et, pour une itération donnée du processus, le ticket d'authentification et/ou la clé de chiffrement correspondante étant communiqués à chaque serveur simultanément ou séquentiellement.

4. Procédé selon la revendication 3, comprenant en outre une étape de détection d'un premier serveur dans l'ensemble de serveurs rejetant le service demandé pour une exigence de performance récupérée donnée, et en réaction, la communication du ticket d'authentification et/ou de la clé de chiffrement correspondante à un second serveur dans l'ensemble de serveurs.

5. Procédé selon l'une quelconque des revendications précédentes, comprenant, en réponse à la sélection d'un serveur parmi le ou les serveurs dudit ensemble de serveurs, la génération d'un accord de niveau de service, SLA, entre le serveur sélectionné parmi le ou les serveurs dudit ensemble de serveurs et le dispositif client, pour la fourniture du service, au moins, selon l'exigence de performance récupérée, et la fourniture du service en conformité avec ledit SLA.

6. Procédé d'exploitation d'un serveur d'authentification mis en place dans le cadre d'un système de télécommunications, ledit système comprenant en outre : un dispositif client ; et un ensemble de serveurs destiné à fournir un service au dispositif client, le procédé comprenant les étapes de :
génération :
d'un ensemble de niveaux de service chiffrés, ledit ensemble comprenant au moins deux niveaux de service différents, chacun desdits niveaux :
comprenant une exigence de performance ; et
étant chiffré avec une clé de chiffrement correspondante issue d'un ensemble de clés de chiffrement ; et
d'un ticket d'authentification pour la fourniture du service par l'ensemble de serveurs au dispositif client, ledit ticket comprenant l'ensemble de niveaux de service chiffrés ;
communication, à l'ensemble de serveurs, du ticket d'authentification ; et
réalisation d'un processus comprenant les étapes de :
communication, à l'ensemble de serveurs, d'une clé de chiffrement, issue de l'ensemble de clés de chiffrement, n'ayant pas encore été communiquée à l'ensemble de serveurs, afin de permettre le traitement, par l'ensemble de serveurs, du ticket d'authentification à l'aide de ladite clé de chiffrement communiquée de façon à récupérer l'exigence de performance au sein du niveau de service correspondant et à déterminer s'il convient de fournir le service, au moins, selon l'exigence de performance récupérée ; et
identification du fait que la fourniture du service, au moins, selon l'exigence de performance récupérée, est :
rejetée par l'ensemble de serveurs, en réaction à quoi il convient de réitérer ultérieurement le processus ; ou
acceptée par au moins l'un des serveurs dudit ensemble de serveurs, en réaction à quoi il convient de sélectionner ultérieurement un serveur parmi le ou les serveurs dudit ensemble de serveurs pour fournir le service, au moins, selon l'exigence de performance récupérée.

7. Procédé d'exploitation d'un ensemble de serveurs configuré pour fournir un service et mis en place dans le cadre d'un système de télécommunications, ledit système comprenant en outre : un dispositif client ; et un serveur d'authentification destiné à générer un ticket d'authentification pour la fourniture du service par l'ensemble de serveurs au dispositif client ; le procédé comprenant les étapes de :
réception du ticket d'authentification pour le dispositif client et le service, ledit ticket d'authentification comprenant un ensemble de niveaux de service chiffrés, et ledit ensemble comprenant au moins deux niveaux de services différents, chacun desdits niveaux :
comprenant une exigence de performance ; et
étant chiffré avec une clé de chiffrement correspondante issue d'un ensemble de clés de chiffrement ;
et
réalisation d'un processus comprenant les étapes de :
réception d'une clé de chiffrement, issue de l'ensemble de clés de chiffrement, n'ayant pas encore été reçue par l'ensemble de serveurs ;
traitement du ticket d'authentification à l'aide de ladite clé de chiffrement communiquée, pour récupérer ainsi l'exigence de performance au sein du niveau de service correspondant ;
détermination selon laquelle il convient ou non de fournir le service, au moins, conformément à l'exigence de performance récupérée ; et
suite à ladite détermination, en fonction de l'identification du fait que la fourniture du service, au moins, selon l'exigence de performance récupérée, est :
rejetée par l'ensemble de serveurs, la réitération ultérieure du processus ; ou
acceptée par au moins l'un des serveurs dudit ensemble de serveurs, la fourniture ultérieure du service par un serveur sélectionné parmi le ou les serveurs dudit ensemble de serveurs, au moins, selon l'exigence de performance récupérée.

8. Support lisible par ordinateur comprenant un programme d'ordinateur qui, lorsque le programme d'ordinateur est exécuté par un ordinateur, amène l'ordinateur à réaliser les étapes selon l'une quelconque des revendications précédentes.

9. Système de télécommunications, ledit système comprenant un :
dispositif client ;
ensemble de serveurs destiné à fournir un service au dispositif client ; et
serveur d'authentification destiné à générer un ticket d'authentification pour la fourniture du service par l'ensemble de serveurs au dispositif client ;
le système de télécommunications comprenant en outre au moins un processeur configuré pour :
générer au niveau du serveur d'authentification :
un ensemble de niveaux de service chiffrés, ledit ensemble comprenant au moins deux niveaux de service différents, chacun desdits niveaux :
comprenant une exigence de performance ; et
étant chiffré avec une clé de chiffrement correspondante issue d'un ensemble de clés de chiffrement ; et
le ticket d'authentification pour le dispositif client et le service, ledit ticket d'authentification comprenant l'ensemble de niveaux de service chiffrés ;
communiquez, à l'ensemble de serveurs, le ticket d'authentification ; et
réaliser un processus comprenant les étapes de :
communication, à l'ensemble de serveurs, d'une clé de chiffrement, issue de l'ensemble de clés de chiffrement, n'ayant pas encore été communiquée à l'ensemble de serveurs ;
traitement, par l'ensemble de serveurs, du ticket d'authentification à l'aide de ladite clé de chiffrement communiquée, pour récupérer ainsi l'exigence de performance au sein du niveau de service correspondant ; détermination, par l'ensemble de serveurs, selon laquelle il convient ou non de fournir le service, au moins, conformément à l'exigence de performance récupérée ; et
suite à ladite détermination, identification du fait que la fourniture du service, au moins, selon l'exigence de performance récupérée, est :
rejetée par l'ensemble de serveurs, en réaction à quoi il convient de réitérer ultérieurement le processus ; ou
acceptée par au moins l'un des serveurs dudit ensemble de serveurs, en réaction à quoi il convient de sélectionner ultérieurement un serveur parmi le ou les serveurs dudit ensemble de serveurs pour fournir le service, au moins, selon l'exigence de performance récupérée.

10. Serveur d'authentification, mis en place dans le cadre d'un système de télécommunications, ledit système comprenant en outre : un dispositif client ; et un ensemble de serveurs pour fournir un service au dispositif client, dans lequel le serveur d'authentification comprend au moins un processeur configuré pour :
générer :
un ensemble de niveaux de service chiffrés, ledit ensemble comprenant au moins deux niveaux de service différents, chacun desdits niveaux :
comprenant une exigence de performance ; et
étant chiffré avec une clé de chiffrement correspondante issue d'un ensemble de clés de chiffrement ; et
un ticket d'authentification pour la fourniture du service par l'ensemble de serveurs au dispositif client, ledit ticket comprenant l'ensemble de niveaux de service chiffrés ;
communiquez, à l'ensemble de serveurs, le ticket d'authentification ; et
réaliser un processus comprenant les étapes de :
communication, à l'ensemble de serveurs, d'une clé de chiffrement, issue de l'ensemble de clés de chiffrement, n'ayant pas encore été communiquée à l'ensemble de serveurs, afin de permettre le traitement, par l'ensemble de serveurs, du ticket d'authentification à l'aide de ladite clé de chiffrement communiquée de façon à récupérer l'exigence de performance au sein du niveau de service correspondant et à déterminer s'il convient de fournir le service, au moins, selon l'exigence de performance récupérée ; et
identifier le fait que la fourniture du service, au moins, selon l'exigence de performance récupérée est :
rejetée par l'ensemble de serveurs, en réaction à quoi il convient de réitérer ultérieurement le processus ; ou
acceptée par au moins l'un des serveurs dudit ensemble de serveurs, en réaction à quoi il convient de sélectionner ultérieurement un serveur parmi le ou les serveurs dudit ensemble de serveurs pour fournir le service, au moins, selon l'exigence de performance récupérée.

11. Ensemble de serveurs, configuré pour fournir un service, mis en place dans le cadre d'un système de télécommunications, ledit système comprenant en outre :
un dispositif client ; et un serveur d'authentification destiné à générer un ticket d'authentification pour la fourniture du service par l'ensemble de serveurs au dispositif client, l'ensemble de serveurs comprenant au moins un processeur configuré pour :
recevoir le ticket d'authentification, pour le dispositif client et le service, ledit ticket d'authentification comprenant un ensemble de niveaux de service chiffrés, et ledit ensemble comprenant au moins deux niveaux de services différents, chacun desdits niveaux :
comprenant une exigence de performance ; et
étant chiffré avec une clé de chiffrement correspondante issue d'un ensemble de clés de chiffrement ;
et
réaliser un processus comprenant les étapes de :
réception d'une clé de chiffrement, issue de l'ensemble de clés de chiffrement, n'ayant pas encore été reçue par l'ensemble de serveurs ;
traitement du ticket d'authentification à l'aide de ladite clé de chiffrement communiquée, pour récupérer ainsi l'exigence de performance au sein du niveau de service correspondant ;
détermination selon laquelle il convient ou non de fournir le service, au moins, conformément à l'exigence de performance récupérée ; et
suite à ladite détermination, en fonction de l'identification du fait que la fourniture du service, au moins, selon l'exigence de performance récupérée est :
rejetée par l'ensemble de serveurs, la réitération ultérieure du processus ; ou
acceptée par au moins l'un des serveurs dudit ensemble de serveurs, en réaction à quoi le service est ultérieurement fourni par un serveur sélectionné parmi le ou les serveurs dudit ensemble de serveurs et, au moins, selon l'exigence de performance récupérée.
